(19) Europäisches Patentamt
European Patent Office
Office européen des brevets

(11) **EP 3 498 138 B1**

(12) **EUROPÄISCHE PATENTSCHRIFT**

(45) Veröffentlichungstag und Bekanntmachung des Hinweises auf die Patenterteilung:
**29.07.2020   Patentblatt 2020/31**

(51) Int Cl.:
***A47J 43/07*** *(2006.01)*      ***A47J 27/00*** *(2006.01)*

(21) Anmeldenummer: **17206570.8**

(22) Anmeldetag: **12.12.2017**

(54) **SPEISENZUBEREITUNGSGERÄT MIT DETEKTION VON ÜBERDRUCK**

FOOD PREPARATION APPARATUS WITH DETECTION OF OVERPRESSURE

APPAREIL DE PRÉPARATION D'ALIMENTS À DÉTECTION DE SURPRESSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**19.06.2019   Patentblatt 2019/25**

(73) Patentinhaber: **Vorwerk & Co. Interholding GmbH
42270 Wuppertal (DE)**

(72) Erfinder:
• **Mosebach, Andrej
  44809 Bochum (DE)**
• **Frielinghaus, Robert
  44799 Bochum (DE)**

(74) Vertreter: **Gille Hrabal
  Brucknerstrasse 20
  40593 Düsseldorf (DE)**

(56) Entgegenhaltungen:
EP-A1- 2 529 650        WO-A1-2012/042981
JP-A- H11 225 891       JP-A- 2014 073 290
US-A1- 2011 154 995

**Beschreibung**

Die Erfindung betrifft ein Speisenzubereitungsgerät mit einem Speisenzubereitungsgefäß, einem Heizelement zum Erhitzen einer Speise in dem Speisenzubereitungsgefäß, einem Werkzeug zum Mischen und/oder Zerkleinern einer Speise in dem Speisenzubereitungsgefäß, einem Deckel für das Speisenzubereitungsgefäß und einem Elektromotor zum Rotieren des Werkzeugs. Die Erfindung betrifft ferner ein Verfahren und ein Computerprogrammprodukt.

Bei einem Speisenzubereitungsgerät wie z.B. einer Küchenmaschine mit einem Heizelement und einem Mixwerkzeug kann je nach Rezept und Speise, die zubereitet werden soll, ein Druckaufbau das Kochergebnis beeinflussen. Jedoch soll auch in solchen Fällen ein steuerbares Kochergebnis erhalten werden.

Die Druckschrift EP2529650A1 offenbart eine Küchenmaschine, bei der die Konsistenz eines in einem Gefäß der Küchenmaschine befindlichen Gargutes bevorzugt ermittelbar ist zufolge des sich beispielsweise bei einem zähen Gargut, beispielsweise breiartiges Gargut, einstellenden erhöhten Motorstroms des das Rührwerk antreibenden Elektromotors.

Die Druckschrift US2011/154995A1 offenbart eine automatische Brotzubereitungsmaschine. Wenn eine Überwachung eines Steuerstromwertes des Mahlmotors gestartet wird, prüft ein Steuergerät, ob der Stromwert einen vorgegebenen Wert erreicht hat, und detektiert so einen gemahlenen Zustand von Reiskörnern.

Ferner wird auf die Druckschriften WO2012/042981A1, JH11225891A und JP2014073290A hingewiesen.

Es ist Aufgabe der Erfindung, ein weiterentwickeltes Speisenzubereitungsgerät bereitzustellen.

Zur Lösung der Aufgabe dienen ein Speisenzubereitungsgerät gemäß dem Hauptanspruch sowie ein Verfahren und ein Computerprogrammprodukt gemäß den Nebenansprüchen. Vorteilhafte Ausführungsformen ergeben sich aus den Unteransprüchen.

Ein Speisenzubereitungsgerät mit einem Speisenzubereitungsgefäß, einem Heizelement zum Erhitzen einer Speise in dem Speisenzubereitungsgefäß, einem Werkzeug zum Mischen und/oder Zerkleinern einer Speise in dem Speisenzubereitungsgefäß, einem Deckel für das Speisenzubereitungsgefäß und einem Elektromotor zum Rotieren des Werkzeugs ist vorgesehen. Eine Überwachungseinheit ist so eingerichtet, dass die Überwachungseinheit eine Leistungsaufnahme des Elektromotors für ein Detektieren eines Überdrucks im Speisenzubereitungsgefäß überwachen kann. Ein steuerbares Kochergebnis kann so erhalten werden.

Je nach Speise und/oder Rezept kann ein vergleichsweise hoher oder niedriger Druck für das gewünschte Kochergebnis erforderlich sein, der sich normalerweise von alleine in dem Speisenzubereitungsgefäß einstellt. Kommt es zu einer Druckabweichung, kann dies beispielsweise Einfluss auf die Garzeit haben. Effekte wie Schaumbildung können bereits durch geringe Druckunterschiede beeinflusst werden.

Wenn daher beispielsweise das Rezept für eine bestimmte Speise einen gewissen Überdruck vorsieht, das Ergebnis der Detektion jedoch keinen Überdruck ergibt, kann beispielsweise dem Benutzer ein Hinweis ausgeben oder das Rezept oder Speisenzubereitungsparameter automatisch angepasst werden, z.B. durch Verlängern der Garzeit. Dies gilt sowohl für druckfest verschließbare Speisenzubereitungsgefäße wie z.B. ein Schnellkochtopf als auch für nicht druckfest verschließbare Speisenzubereitungsgefäße für eine herkömmliche Küchenmaschine. Tritt beispielsweise eine Materialermüdung bei einer Deckel-Dichtung ein, kann dies eine Ursache für einen Druckabfall sein, so dass der planmäßige Druck im Speisenzubereitungsgefäß nicht vorliegt.

Die Leistungsaufnahme eines Elektromotors ist die für den Betrieb benötigte elektrische Energie. Die Leistungsaufnahme kann als dem Elektromotor bereitgestellte elektrische Leistung P in Watt und/oder als der dem Elektromotor zugeführte Motorstrom in Ampere angegeben werden. Wenn die elektrische Netzspannung im Betrieb im Wesentlichen konstant bleibt, können die elektrische Leistung und der Motorstrom ein zueinander ungefähr konstantes Verhältnis aufweisen. Die Gleichung $P = U \times I$ mit elektrischer Leistung P, Spannung U und Motorstrom I kann die Korrelation von elektrischer Leistung und Motorstrom mathematisch beschreiben.

Während des Betriebs ändert sich die benötigte elektrische Leistung des Elektromotors in Abhängigkeit von dem zu leistenden Misch- oder Zerkleinerungsvorgang. Wenn zum Beispiel eine Speise aufgrund dessen Beschaffenheit einen größeren Widerstand beim Mischen leistet als eine andere Speise, so benötigt der Elektromotor bei sonst gleichen Einstellungen für beide Speisen eine unterschiedliche Menge elektrischer Leistung. Beim Mischen einer Speise kann sich durch das Ändern der Einstellung der Soll-Drehzahl die benötigte Menge elektrischer Leistung ebenfalls ändern. Allgemein ist eine Motorsteuerung vorgesehen, um dem Elektromotor stets die aktuell benötigte elektrische Leistung bereitzustellen.

Der Erfindung liegt nun die Erkenntnis zugrunde, dass sich ein Überdruck in dem Speisenzubereitungsgefäß auf die Leistungsaufnahme des Elektromotors auswirkt.

Durch das Vorsehen einer Überwachungseinheit, welche die Leistungsaufnahme des Elektromotors für ein Detektieren eines Überdrucks im Speisenzubereitungsgefäß überwacht, können somit besonders zuverlässig Maßnahmen zur Steuerung des Kochprozesses und/oder des Druckes im Speisenzubereitungsgefäß aktiv bzw. automatisiert eingeleitet werden und/oder der Benutzer über das Vorliegen eines bestimmten Druckstatus, wie z.B. planmäßiges Vorliegen eines Überdrucks, informiert werden. Ein besonders reproduzierbares Kochergebnis kann so ermöglicht werden.

Der Überdruckaufbau kann zudem regelmäßig ohne eine Änderung an der ansonsten üblichen Hardware erkannt werden. Der Einsatz eines aufwändigen Differenzdrucksensors oder Absolutdrucksensors kann vermieden werden. Ein Nachrüsten bestehender Gerät kann somit in vielen Fällen nur durch ein Software-Update erfolgen. Ferner kann die Überwachungseinheit zusätzlich bzw. komplementär zu weiteren oder bereits implementierten Lösungen zur Überdruckdetektion eingesetzt und damit ein besonders zuverlässiges Detektieren des Druckstatus ermöglicht werden.

Insbesondere umfasst die Überwachungseinheit keinen Differenzdrucksensor oder Absolutdrucksensor, der z.B. bei einem bestimmten Überdruck in die Steuerung des Speisenzubereitungsgeräts eingreift.

Das Heizelement ist bevorzugt außerhalb des Raums zur Speisenzubereitung in dem Speisenzubereitungsgefäß angebracht, so dass die Speise über einen wärmeleitenden Gefäßboden und/oder eine wärmeleitende Gefäßwand erwärmt werden kann. Das Werkzeug innerhalb des Raums zur Speisenzubereitung des Speisenzubereitungsgefäßes wird bevorzugt über eine Antriebswelle angetrieben, die sich durch eine Gefäßdurchführung erstreckt. Eine Abdichtung sorgt allgemein dafür, dass keine Flüssigkeit von dem Innenraum des Speisenzubereitungsgefäßes durch die Gefäßdurchführung nach außen gelangen kann. Die Gefäßdurchführung erstreckt sich insbesondere durch den Gefäßboden, vorzugsweise in der Mitte des Gefäßbodens. An der entgegengesetzten Seite zum Gefäßboden, d.h. an der Oberseite, ist das Speisenzubereitungsgefäß offen. Der Deckel deckt die offene Oberseite des Speisenzubereitungsgefäßes ab.

Im Speisenzubereitungsgefäß herrscht vor dem Beginn des Kochprozesses oder vor einem Erhitzen im Wesentlichen Normaldruck. Normaldruck meint ca. 1 bar Umgebungsdruck. Ein Überdruck liegt grundsätzlich vor, wenn sich innerhalb des Speisenzubereitungsgefäßes ein größerer Druck als der Normaldruck aufgebaut hat. Die Zubereitung mancher Speisen lässt sich verbessern, wenn ein steuerbarer Überdruck im Speisenzubereitungsgefäß erzielt wird. Dies kann z. B. bei schaumbildenden Rezepten der Fall sein.

Zum Detektieren eines Überdrucks wird zunächst die Leistungsaufnahme des Elektromotors erfasst, d.h. gemessen oder von einer Motorsteuerung erhalten. Auf Basis der erfassten Leistungsaufnahme des Elektromotors wird ein Überwachungswert ermittelt, beispielsweise durch eine Signalverarbeitung. Insbesondere umfasst die Signalverarbeitung eine Signalfilterung und/oder Signalumformung der erfassten Leistungsaufnahme. Der ermittelte Überwachungswert kann mit dem tatsächlichen Überdruck in dem Speisenzubereitungsgefäß korreliert oder zumindest von dem tatsächlichen Überdruck in dem Speisenzubereitungsgefäß abhängig sein.

In einer Ausgestaltung kann der Überwachungswert oder der Druckstatus in Form eines Maßes für den Überdruck vorzugsweise mit der Einheit Bar ausgegeben werden, z.B. "1,1 bar". Insbesondere kann der sich daraus ergebende Überdruck um maximal 20%, bevorzugt maximal 15%, besonders bevorzugt maximal 10% von dem tatsächlichen Überdruck in dem Speisenzubereitungsgefäß abweichen. Um den Kochprozess gewünscht zu steuern, kann es jedoch bereits genügen, wenn zuverlässig das lediglich das Vorhandsein oder NichtVorhandensein eines Überdrucks detektiert werden kann. Denn einige Prozesse bei der Speisenzubereitung ändern sich signifikant bei Überschreiten und/oder Unterschreiten der 1-Bar-Schwelle.

In einer Ausgestaltung ist für die Überwachung ein Detektionskriterium für ein festgelegtes Überwachungsereignis hinterlegt. In einer Ausgestaltung sind mehrere Detektionskriterien für jeweils ein festgelegtes Überwachungsereignis in der Überwachungseinheit hinterlegt. Das Überwachungsereignis kann beispielsweise "Kein Überdruck", "Kein ausreichender Überdruck" oder "Überdruck liegt vor" sein.

Insbesondere umfasst ein festgelegtes Überwachungsereignis eine Detektionsschwelle und optional auch eine Mindesttemperaturschwelle, d.h. eine Mindesttemperatur. Auf die Mindesttemperatur wird später noch genauer eingegangen. Insbesondere werden die Detektionsschwelle und/oder die Mindestschwelle auf den Überwachungswert angewendet. Wenn der Überwachungswert die Detektionsschwelle bzw. die Mindestschwelle erreicht, wird das entsprechende Überwachungsereignis ausgegeben.

In einer Ausführungsform ist die Überwachungseinheit so eingerichtet, dass anhand eines Ergebnisses der Detektion aus dem Überwachen der Leistungsaufnahme des Elektromotors ein Speisenzubereitungsparameter und/oder ein Rezept für die Speise angepasst werden.

Ein Speisenzubereitungsparameter ist beispielsweise die planmäßige Dauer einer Erhitzung durch das Heizelement. Ein Rezept kann beispielsweise durch die Erhöhung der zuzugebenden Menge Flüssigkeit, Speisestärke oder Salz angepasst werden. Abweichenden Druckverhältnissen kann so entgegengewirkt werden, um das gewünschte Kochergebnis zumindest näherungsweise erzielen zu können.

In einer Ausführungsform wird während des Betriebs in Abhängigkeit von der Leistungsaufnahme des Elektromotors ein Hinweis für den Benutzer bereitgestellt. Je nach detektiertem Druckstatus, z.B. kein Überdruck oder Überdruck liegt vor, kann dann ein Hinweis mit einer Klassifikation des Überdrucks und/oder einer Angabe über eine ungefähre Höhe des Überdrucks ausgegeben werden. Insbesondere bilden die Überwachungsereignisse die Klassifikation. Bevorzugt wird je nach Klassifikation des detektierten Überdrucks dem Benutzer eine Anleitung in Form eines Hinweises zur Steuerung des Drucks ausgegeben, um den Druck entweder zu erhöhen oder zu reduzieren. Insbesondere wird der Hinweis an einem Display des Speisenzubereitungsgeräts angezeigt oder an ein Smartphone des Benutzers für ein Alarmieren und Anzeigen übermittelt. Vorzugsweise ist der Hinweis alternativ oder ergänzend akustisch, so dass der Benutzer beispielsweise durch ein hörbares Signal informiert wird.

In einer Ausführungsform wird während des Betriebs in Abhängigkeit von der Leistungsaufnahme des Elektromotors eine Verriegelungseinrichtung für den Deckel gesteuert. Wenn z.B. infolge einer gealterten Deckeldichtung der Zieldruck nicht erreicht wird, kann in einer Ausgestaltung der Deckel stärker auf den Speisenzubereitungsbehälter gedrückt werden, um einen Druckaufbau zu unterstützen. In einer anderen alternativen oder ergänzenden Ausgestaltung kann bei zu geringem Druck eine längere Verweilzeit der Speise in dem geschlossenen Speisenzubereitungsgefäß sichergestellt werden, indem der Deckel für einen verlängerten Zeitraum geschlossen gehalten wird. Insbesondere vermag die Verriegelungseinrichtung zumindest den Deckel in einer geschlossenen Position auf dem Speisenzubereitungsgefäß zu verriegeln und zum Öffnen des Speisenzubereitungsgefäßes den Deckel zu entriegeln.

In einer Ausführungsform kann während des Betriebs bei Detektieren eines Überdrucks im Speisenzubereitungsgefäß die Verriegelungseinrichtung nicht entriegelt werden, insbesondere bis ein festgelegtes Freigabekriterium erfüllt ist. Wenn ein Überdruck detektiert wurde, kann der Benutzer also beispielsweise nicht die Verriegelungseinrichtung entriegeln, wenn dadurch z.B. das Kochergebnis negativ beeinflusst werden würde.

Das Freigabekriterium kann beispielsweise derart festgelegt sein, dass nach einem Detektieren eines Überdrucks im Speisenzubereitungsgefäß die Verriegelungseinrichtung solange nicht entriegelt werden kann, bis kein Überdruck oder zumindest kein relevanter Überdruck mehr detektiert wird. Bei bestimmten Speisen indiziert dies die Fertigstellung der Speise, beispielsweise weil der gesamte Flüssigkeitsanteil verdampft ist. In einer alternativen oder ergänzenden Ausgestaltung ist das Freigabekriterium so definiert, dass ein mit dem Überdruck korrelierender Überwachungswert eine festgelegte Freigabeschwelle unterschreitet. So kann die Speise bei dem detektierten Druck für eine festgelegte Zeit weiter köcheln gelassen werden, um ein gewünschtes Kochergebnis zu erzielen.

In einer Ausführungsform wird während des Betriebs in Abhängigkeit von der Leistungsaufnahme des Elektromotors die Heizleistung beeinflusst, insbesondere erhöht, reduziert und/oder das Heizelement abgeschaltet. Der Kochprozess kann auf diese Weise besonders wirkungsvoll gesteuert werden.

In einer Ausführungsform wird während des Betriebs in Abhängigkeit von der Leistungsaufnahme des Elektromotors ein Ventil oder eine Auslassöffnung geöffnet. Der Überdruck kann so besonders schnell abgebaut und der Kochprozess mit einer besonders kurzen Reaktionszeit angepasst werden.

In einer Ausführungsform überwacht die Überwachungseinheit während des Betriebs die Leistungsaufnahme des Elektromotors für das Detektieren eines Überdrucks im Speisenzubereitungsgefäß erst bei Erreichen einer Mindesttemperatur im Speisenzubereitungsgefäß. Der Aufwand der Überwachung kann so reduziert werden. Ein Überdruck entsteht normalerweise durch ein Verdampfen einer Flüssigkeit, die im dampfförmigen Zustand ein größeres Volumen einnimmt als im flüssigen Zustand. Ein Verdampfen und folglich ein praxisrelevanter Überdruck, der das Kochergebnis zu beeinflussen vermag, können somit normalerweise erst ab bestimmten Temperaturen eintreten. Unterhalb solcher Temperaturen kann also der Aufwand für die Detektion eines Überdrucks eingespart werden.

Die Mindesttemperatur ist eine festgelegte und insbesondere in der Überwachungseinheit hinterlegte Mindesttemperaturschwelle. Erreichen einer Mindesttemperatur im Speisenzubereitungsgefäß meint, dass eine gemessene Temperatur des Speisenzubereitungsgefäßes oder im Speisenzubereitungsgefäß die Mindesttemperatur erreicht. Das Speisenzubereitungsgerät hat allgemein einen Temperatursensor zum Messen der Temperatur des Speisenzubereitungsgefäßes bzw. im Speisenzubereitungsgefäß.

Vorzugsweise ist die Mindesttemperatur 50 °C, 60 °C, 80 °C, 90 °C, 96 °C oder 100 °C. Bei 50 °C bildet Wasser noch keine Luftblasen und auch noch keinen sichtbaren Dampf. Eine Referenzerfassung der Leistungsaufnahme des Elektromotors ohne Überdruck ist so möglich. Bei 60 °C bildet Wasser kleine Luftblasen, wodurch langsam sichtbarer Dampf entsteht. Der Einfluss des Überdrucks auf die Rezeptzubereitung ist bei 60 °C noch relativ gering. Ein Festlegen der Mindesttemperatur auf 60 °C hat daher den Vorteil, dass ein besonders langer Zeitraum zur Aufzeichnung einer Referenzerfassung der Leistungsaufnahme des Elektromotors ohne nennenswerten Überdruck erzeugt werden kann. Bei 80 °C bildet Wasser perlengroße Luftblasen, die bereits zu einer nennenswerten Menge Dampf führen können. Der Zeitraum zur Aufzeichnung einer Referenzerfassung der Leistungsaufnahme ohne nennenswerten Überdruck ist daher relativ kurz, jedoch kann gleichzeitig der Überwachungsaufwand durch das relativ späte Aktivieren der Überwachungseinheit reduziert werden. Bei 90 °C bildet Wasser aufsteigende Luftblasen begleitend mit ständiger Dampfausbildung. Die Aufzeichnung einer Referenzerfassung der Leistungsaufnahme ist dann nur für kurze Zeit ohne das Vorliegen eines nennenswerten Überdrucks möglich. Bei 96 °C verdampft flüssiges Wasser zunehmend zu Dampf. Der Überwachungsaufwand ist hier besonders gering, jedoch wird die Referenzerfassung bei dampfdichtem Verschluss des Speisenzubereitungsgefäßes ohne einen zumindest geringen Überdruck kaum möglich sein. Bei 100°C verdampft Wasser mit maximaler Geschwindigkeit, so dass der Druck oberhalb des Normaldrucks schnell ansteigt und eine Referenzerfassung ohne Überdruck nicht möglich ist.

In einer Ausführungsform wird in Abhängigkeit von der Leistungsaufnahme des Elektromotors nur dann eine Maßnahme ausgelöst, wenn eine Mindesttemperatur vorliegt, insbesondere 50 °C, 60 °C, 80 °C, 90 °C, 96 °C oder 100 °C. Eine Maßnahme ist z.B. ein Steuern der Verriegelungseinrichtung für den Deckel in Abhängigkeit von der Leistungsaufnahme des Elektromotors, ein Beeinflussen der Heizleistung oder ein Bereitstellen eines Hinweises. Weil die Maßnahme nur bei einer Mindesttemperatur ausgelöst wird, kann der Steuerungsaufwand reduziert werden.

In einer Ausführungsform umfasst die Überwachungseinheit eine Detektionsschwelle zur Detektion eines Überdrucks. Die Überwachungseinheit ist so eingerichtet, dass ein Überwachungsereignis von der Überwachungseinheit ausgegeben wird, wenn ein Überwachungswert die Detektionsschwelle erreicht. Der Überwachungswert wird auf Basis der erfassten Leistungsaufnahme des Elektromotors ermittelt. Erfasste Leistungsaufnahme bedeutet gemessene oder von einer Motorsteuerung übermittelte Leistungsaufnahme.

In einer Ausführungsform wird während des Betriebs ein Überdruck durch Vergleich der erfassten Leistungsaufnahme des Elektromotors oder des Überwachungswertes zeitlich vor und nach einem Überschreiten eines Siedepunktes einer Flüssigkeit oder einer ausgewählten Temperatur in dem Speisenzubereitungsgefäß detektiert. Der Siedepunkt ist für den Kochprozess häufig von besonderer Relevanz, so dass auf diese Weise eine besonders effiziente Überwachung des Druckstatus zur Steuerung des Kochprozesses erzielt werden kann. Ferner erfolgt nach Erreichen des Siedepunktes normalerweise ein relativ schneller Anstieg des Drucks bzw. Überdrucks, der sich in der zeitaufgelösten Leistungsaufnahme des Elektromotors niederschlägt. Dies gilt auch für die ausgewählte Temperatur, die bevorzugt nahe der Siedetemperatur eingestellt wird. Durch den Vergleich der erfassten Leistungsaufnahme zeitlich vor und nach einem Überschreiten des Siedepunktes bzw. der ausgewählten Temperatur kann somit der Kochprozess besonders zuverlässig gesteuert werden. Ein Vergleich umfasst bevorzugt eine Signalverarbeitung der erfassten Leistungsaufnahme des Elektromotors zeitlich vor und nach einem Überschreiten eines Siedepunktes bzw. der ausgewählten Temperatur. In einer Ausgestaltung wird der Siedepunkt durch die gemessene Temperatur des Speisenzubereitungsgefäßes oder im Speisenzubereitungsgefäß und/oder durch eine Erfassung einer Veränderung der Wärmekapazität der Flüssigkeit zumindest näherungsweise ermittelt.

In einer Ausführungsform wird während des Betriebs die Detektionsschwelle mit der erfassten Leistungsaufnahme des Elektromotors nach einem Erreichen einer Mindesttemperatur und/oder vor einem Erreichen einer Höchsttemperatur oder eines Siedepunktes ermittelt. Durch das Vorsehen einer Mindesttemperatur und Höchsttemperatur kann besonders wirkungsvoll und einfach sichergestellt werden, dass die Detektionsschwelle auf Basis einer erfassten Leistungsaufnahme bzw. Referenzerfassung ermittelt wird, während noch kein oder kein nennenswerter Überdruck im Speisenzubereitungsgefäß vorlag. Eine besonders zuverlässige Überwachung wird so ermöglicht.

Die Mindesttemperatur wurde bereits oben näher erläutert. Die Höchsttemperatur ist eine Höchsttemperaturschwelle bezogen auf die im Speisenzubereitungsgefäß gemessene Temperatur. In einer Ausgestaltung ist die Mindesttemperatur mindestens 50 °C und/oder höchstens 90 °C. In einer Ausgestaltung ist die Höchsttemperatur mindestens 70 °C und/oder höchstens 96 °C. Ein Algorithmus ist vorgesehen, um die Detektionsschwelle zu ermitteln, also zu berechnen. Insbesondere ist eine Signalverarbeitung der erfassten Leistungsaufnahme vorgesehen, um eine verbessert auswertbare Eingangsgröße für den Algorithmus bereitzustellen.

In einer Ausführungsform wird während des Betriebs erst nach Erreichen der ausgewählten Temperatur oder des Siedepunktes zum Überwachen des Überwachungsereignisses ermittelt, ob der Überwachungswert die Detektionsschwelle (M) erreicht. Der Überwachungsaufwand kann so reduziert und der Kochprozess sowie der Druck bzw. Überdruck besonders effektiv gesteuert werden.

Die ausgewählte Temperatur ist eine Temperaturschwelle bezogen auf die im Speisenzubereitungsgefäß gemessene Temperatur, d.h. die gemessene Temperatur des Speisenzubereitungsgefäßes bzw. die im Speisenzubereitungsgefäß gemessene Temperatur. Die ausgewählte Temperatur ist allgemein so festgelegt, dass bei Erreichen der ausgewählten Temperatur eine erhöhte Dampfbildung vorliegt. Vorzugsweise ist die ausgewählte Temperatur 96 °C oder 100 °C. Die ausgewählte Temperatur ist in der Überwachungseinheit hinterlegt.

In einer Ausführungsform entspricht der Überwachungswert einem gleitenden Mittelwert, einer Schwankungsamplitude und/oder einer Grundfrequenz der erfassten Leistungsaufnahme des Elektromotors, insbesondere des Motorstroms. Allgemein ist ein gleitender Mittelwert ein Durchschnittswert über einen festgelegten, mitlaufenden Zeitraum. Eine besonders zuverlässige Überwachung insbesondere mittels einer Detektionsschwelle für den gleitenden Mittelwert, die Schwankungsamplitude und/oder die Grundfrequenz kann so umgesetzt werden.

In einer Ausführungsform ist die Detektionsschwelle eine mitlaufende Schwelle oder eine absolute Schwelle. Durch eine mitlaufende Schwelle, z.B. ein mitlaufendes Toleranzband, kann ein charakteristischer Kurvenverlauf bei einem Druckaufbau identifiziert werden wie z.B. eine exponentiell ansteigende Kurve. Insbesondere fließt zur Ermittlung einer mitlaufenden Schwelle auch die erfasste Leistungsaufnahme des Elektromotors nach einer ausgewählten Temperatur oder nach einem Siedepunkt ein. Durch eine absolute Schwelle ist eine besonders einfache Detektion eines Überdrucks möglich.

In einer Ausführungsform wird die Leistungsaufnahme durch den Motorstrom für den Elektromotor ermittelt. Die Leistungsaufnahme kann so besonders einfach zeitaufgelöst erfasst werden. Insbesondere kann die Höhe des Motorstroms von der Motorsteuerung bereitgestellt und an die Überwachungseinheit übermittelt werden. Vorzugsweise überwacht die Überwachungseinheit die Leistungsaufnahme des Elektromotors für ein Detektieren eines Überdrucks im Speisenzubereitungsgefäß durch Überwachen des Motorstroms.

Ein weiterer Aspekt der Erfindung betrifft ein Verfahren für ein Detektieren eines Überdrucks in einem Speisenzubereitungsgefäß eines Speisenzubereitungsgerätes. Das Speisenzubereitungsgeräte umfasst ein Heizelement zum Erhitzen einer Speise in dem Speisenzubereitungsgefäß, ein Werkzeug zum Mischen und/oder Zerkleinern einer Speise in dem Speisenzubereitungsgefäß, einen Deckel für das Speisenzubereitungsgefäß und einen Elektromotor zum Rotieren des Werkzeugs. Eine Überwachungseinheit überwacht eine Leistungsaufnahme des Elektromotors zum Detektieren eines Überdrucks im Speisenzubereitungsgefäß. Die Merkmale, Ausführungsformen und Wirkungen des eingangs beschriebenen Systems zur Lösung der Aufgabe beziehen sich entsprechend auch auf dieses Verfahren.

Ein weiterer Aspekt der Erfindung betrifft ein Computerprogrammprodukt, das Befehle umfasst, die bei der Ausführung des Programms des Computerprogrammprodukts durch eine Datenverarbeitungseinrichtung die Datenverarbeitungseinrichtung veranlassen, die Schritte des Verfahrens nach dem vorhergehenden Anspruch auszuführen. Die Merkmale, Ausführungsformen und Wirkungen des eingangs beschriebenen Systems zur Lösung der Aufgabe beziehen sich entsprechend auch auf dieses Computerprogrammprodukt. Die Datenverarbeitungseinrichtung fasst die Überwachungseinheit um. In einer Ausgestaltung umfasst die Datenverarbeitungseinrichtung einen Prozessor und einen Speicher. Auf dem Speicher ist üblicherweise das Programm, d.h., auf dem Speicher speicherbare Befehle bzw. ein Computer-Programm-Code gespeichert. Der Prozessor, der Speicher und der Computer-Programm-Code sind so konfiguriert, dass ein Verfahren mit mehreren Verfahrensschritten durchgeführt werden kann. Durch Verfahrensschritte kann beispielsweise ein Ermitteln oder Berechnen realisiert werden.

Nachfolgend werden Ausführungsbeispiele der Erfindung auch anhand von Figuren näher erläutert. Merkmale der Ausführungsbeispiele und weiterer nachfolgend beschriebener alternativer oder ergänzender Ausgestaltungen können einzeln oder in einer Mehrzahl mit den beanspruchten Gegenständen kombiniert werden. Die beanspruchten Schutzbereiche sind nicht auf die Ausführungsbeispiele beschränkt.

Es zeigen:

Figur 1: Schematische Frontansicht eines Speisenzubereitungsgeräts mit einem im Querschnitt gezeigten Speisenzubereitungsgefäß;

Figur 2: Schematische Darstellung eines zeitlichen Verlaufs der Leistungsaufnahme des Elektromotors bei der Zubereitung einer wasserhaltigen Speise in einem Speisenzubereitungsgefäß;

Figur 3: Schematische Darstellung eines Blockdiagramms zur Signalverarbeitung der Leistungsaufnahme in Form des Motorstroms mit Illustrationen I bis IV der dabei sukzessiv erfolgenden Signalveränderungen über die Zeitachse.

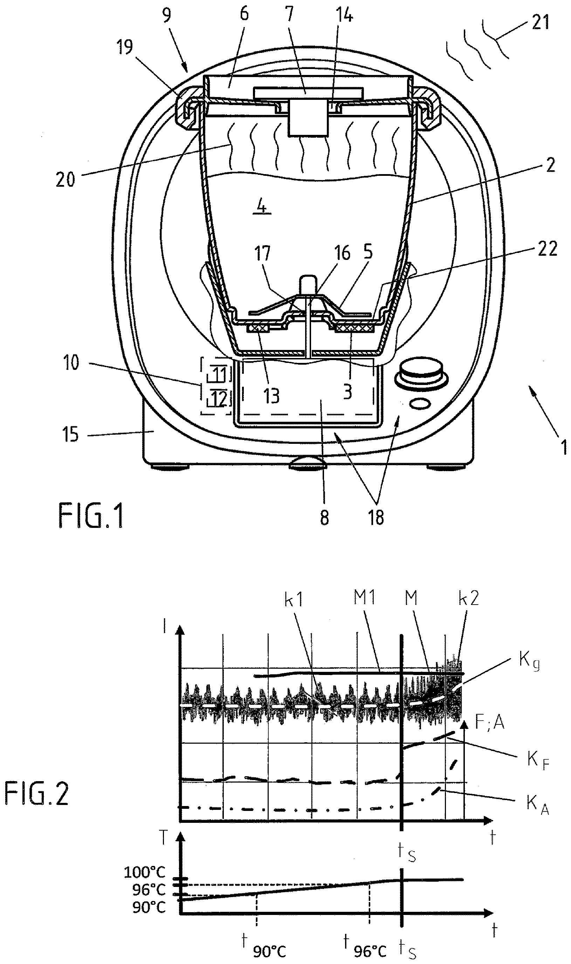

Die Figur 1 zeigt ein Speisenzubereitungsgerät 1 mit einem Speisenzubereitungsgefäß 2, worin gerade eine wasserhaltige Speise wie z.B. eine Suppe gekocht wird. Durch ein Heizelement 3 wird die Speise 4 erhitzt und die Temperatur der Speise 4 bzw. im Speisenzubereitungsgefäß 2 durch den Temperatursensor 13 näherungsweise gemessen. Einem Werkzeug 5, insbesondere Mixmesser mit radial abstehenden Klingen, zum Mischen und/oder Zerkleinern einer Speise 4 in dem Speisenzubereitungsgefäß 2 rotiert beim Erhitzen, um ein Anbrennen zu vermeiden. Über eine Antriebswelle 16, die sich durch eine Gefäßdurchführung 17 zum Werkzeug 5 im Inneren des Speisenzubereitungsgefäßes 2 erstreckt, kann ein Elektromotor 8 das Werkzeug 5 antreiben. Eine Datenverarbeitungseinrichtung 10 mit einem Prozessor 11 und einem Speicher 12 ist insbesondere im Gehäuse 15 integriert. Eine Benutzerschnittstelle 18 mit einem Display und/oder einem Bedienschalter ist ebenfalls in dem Gehäuse 15 integriert.

Ein Deckel 6, 7 deckt die offene Oberseite des Speisenzubereitungsgefäßes 2 ab und umfasst ein erstes Deckelelement 6 und ein zweites Deckelelement 7. Das scheibenförmige erste Deckelelement 6 liegt auf dem Speisenzubereitungsgefäß 2 auf und hat eine mittige Deckelöffnung 14 zum Einfügen von Zutaten in das Speisenzubereitungsgefäß 2. Das separate zweite Deckelelement 7 dient dem Abdecken der Deckelöffnung 14. Beim Kochen der Speise 4 bildet sich aufsteigender Dampf 20 und der Druck in dem Speisenzubereitungsgefäß 2 steigt an, und zwar besonders nach Erreichen des Siedepunktes. Im Fall von Überdruck entsteht eine Druckkraft, die in Richtung des Gefäßbodens 22 wirkt, so dass eine erhöhte Last bzw. Axiallast auf die Antriebswelle 16 eine erhöhte Reibung in dem Lager der Antriebswelle 16 nach sich zieht. Die erhöhte Reibung erhöht wiederum die Last auf den Elektromotor 8, was zu einer höheren Leistungsaufnahme führt.

Insbesondere ist daher bei Überdruckbildung eine erhöhte Stromaufnahme zu beobachten. Der dem Elektromotor 8 zugeführte Motorstrom I erhöht sich dann wie in Figur 2 gezeigt.

Die Figur 2 zeigt den Motorstrom I über der Zeit t in einem Zeitfenster, bei dem die Temperatur gerade den Siedepunkt zum Zeitpunkt $t_S$ überschreitet. Der Dampf 21 entweicht beispielsweise stoßweise wie in Figur 1 illustriert. Es kann insbesondere zu einer Serie von Austritten kleinerer Mengen von entweichendem Dampf 21 infolge des Überdrucks kommen. Der Druck fällt bei einem solchen Entweichen bzw. Entweichungen schlagartig um kleine Beträge ab und steigt sofort wieder an. Die Last auf den Elektromotor 8 kann dadurch entsprechend stärker schwanken im Vergleich zum Kochvorgang ohne Überdruck, insbesondere vor Erreichen des Siedepunkts oder einer ausgewählten Temperatur. Die stärkere Schwankung der Last kann zu einer erhöhten Grundfrequenz F und/oder einer erhöhten Amplitude A des Motorstroms I führen, wie in Figur 2 schematisch durch die Kurven $K_F$ (Frequenz-Verlauf) und $K_A$ (Amplituden-Verlauf) illustriert. Grundsätzlich kann sich bei Eintreten eines Überdrucks der Gleichgewichtszustand des komplexen Systems aus Motorsteuerung, Reibungsverlusten, Temperatur- und Druckerhöhung, und Motorverhalten beim Überschreiten des Siedepunkts ändern. Dies kann sich dann in der veränderten zeitlichen Leistungsaufnahme niederschlagen. Vorzugsweise werden daher für eine zuverlässige Detektion die Motorleistungsaufnahme und dessen Änderung bei Erreichen des Siedepunkts überwacht.

Auf eine Druckerhöhung kann somit dann geschlossen werden, wenn die oben beschriebenen Phänomene beobachtet bzw. durch die automatisch arbeitende Überwachungseinheit mithilfe entsprechend festgelegter Detektionskriterien detektiert werden, die z.B. die erhöhte Leistungsaufnahme, ein erhöhtes Rauschen, die erhöhte Frequenz der Grundschwingung, die erhöhte Schwingungsamplitude der Grundschwingung oder einen charakteristischen Kurvenverlauf der Leistungsaufnahme über die Zeit berücksichtigen. Ist ein Detektionskriterium für ein festgelegtes Überwachungsereignis bezogen auf ein bestimmtes Ausmaß des Überdrucks erfüllt, wird beispielsweise dem Benutzer eine entsprechende Mitteilung in Form eines Hinweises am Display ausgegeben.

Die Detektionsgenauigkeit kann weiter verbessert werden, wenn die Daten vor Erreichen des Siedepunkts mit den Daten nach Überschreiten des Siedepunktes verglichen werden. Dies wird nachfolgend an einem exemplarischen Beispiel erläutert, bei dem die Überwachungseinheit zum Überwachen des Überwachungsereignisses "Überdruck liegt vor" eingerichtet ist, welches den Benutzer darauf hinweist, dass das Kochergebnis infolge eines Überdrucks beeinflusst werden könnte und dazu auffordert, die Kochzeit zu reduzieren. Alternativ kann die Kochzeit automatisch reduziert werden. In diesem Beispiel wird eine Suppe gekocht. Dabei steigt die Temperatur im Speisenzubereitungsgefäß 2 an, wie in Figur 2 schematisch illustriert. Wenn eine festgelegte Mindesttemperatur von 90 °C erreicht ist (in Figur 2 zum Zeitpunkt $t_{90°C}$), wird ein gleitender Mittelwert M1 für die spätere Detektionsschwelle M auf Basis des erfassten Motorstroms I bzw. der Kurve k1 fortlaufend durch einen entsprechenden Algorithmus berechnet.

Wenn eine festgelegte Höchsttemperatur von 96 °C erreicht ist, bildet der zu diesem Zeitpunkt $t_{96°C}$ berechnete gleitende Mittelwert M1 die Detektionsschwelle M für das Überwachungsereignis "Überdruck liegt vor". Alternativ oder ergänzend kann permanent bis zum Erreichen des Siedepunktes der gleitende Mittelwert M1 ermittelt werden.

Bei Erreichen einer ausgewählten Temperatur oder des Siedepunktes wird der zu diesem Zeitpunkt $t_S$ vorliegende gleitende Mittelwert M1 als die bevorzugt kontante Detektionsschwelle M für die Überwachung des Überwachungsereignisses verwendet. Wie Figur 2 zeigt, umfasst der Algorithmus für den gleitenden Mittelwert M1 und damit für die Detektionsschwelle M einen Faktor, z.B. 1,25, so dass die Detektionsschwelle M z.B. 25 % höher ist im Vergleich zum gleitenden Mittelwert Kg während der Referenzerfassung der Leistungsaufnahmen vor Erreichen der ausgewählten Temperatur bzw. des Siedepunktes $t_S$. In einer Ausgestaltung erfolgt die Referenzmessung insbesondere innerhalb eines von der Temperatur abhängigen Zeitraums, z.B. zwischen den Zeitpunkten $t_{90°C}$ bis $t_{96°C}$, d.h., ab einer Temperatur von 90 °C bis zu einer Temperatur von 96 °C.

In dem Beispiel der Figur 2 wird ab dem Zeitpunkt $t_S$ bei Überschreiten des Siedepunkts, d.h., 100 °C bei der Speise 4, der gleitende Mittelwert Kg unter Verwendung der Detektionsschwelle M überwacht. Der gleitende Mittelwert Kg wird auf Basis des erfassten Motorstroms I berechnet. In der Figur 2 wird der gleitende Mittelwert Kg vor dem Siedepunkt als Kurve k1 und nach dem Siedepunkt als Kurve k2 bezeichnet. Wenn der gleitende Mittelwert Kg bzw. die Kurve k2 die Detektionsschwelle M erreicht, wird das Überwachungsereignis "Überdruck liegt vor" detektiert. In der Figur 2 hat der gleitende Mittelwert Kg die Detektionsschwelle M jedoch nicht erreicht. Der Überdruck ist also für die zubereitete Suppe auf Basis der Überwachung derzeit unbedenklich. Zuvor beschriebene Maßnahmen würden erst bei Detektion des Überwachungsereignisses ausgelöst werden.

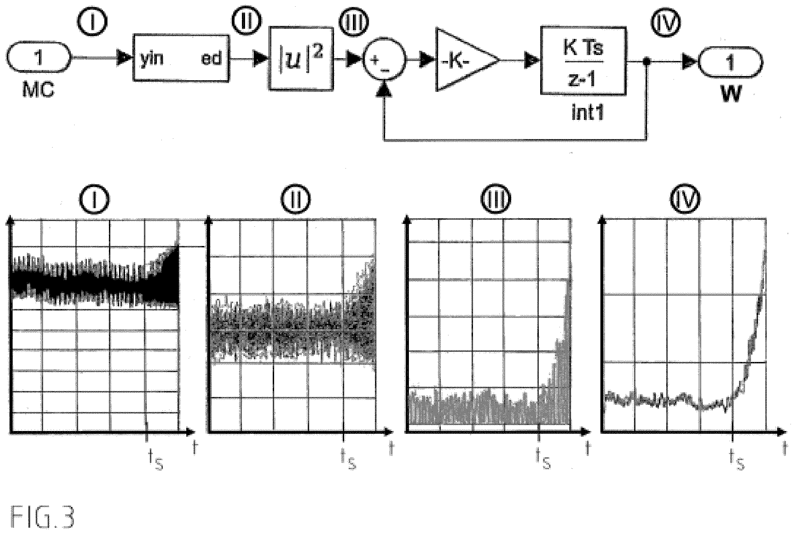

Die Zuverlässigkeit der Überwachung kann weiter erhöht werden, indem das Signal der Leistungsaufnahme oder des Motorstroms I verbessert verarbeitet und/oder gefiltert wird. Beispielsweise kann so ein Überwachungswert W erhalten werden. Die Figur 3 zeigt ein Beispiel einer solchen Signalverarbeitung anhand eines Blockschaltbildes. MC ist der Motorstrom I (siehe Diagramm I der Fig. 3).

Das Blockschaltsymbol mit dem Eingangssignal "yin" und dem Ausgangssignal "ed" stellt einen Filter dar, insbesondere einen sogenannten Unknown-Input-Observer, der vorzugsweise so eingerichtet ist, dass die Grundschwingung und/oder der Gleichanteil des Eingangssignals "yin" entfernt werden (siehe Diagramm II der Fig. 3). "Yin" entspricht dabei dem Motorstrom I, d.h. dem Motorstromsignal. Vorzugsweise umfasst der Filter einen mehrdimensionalen Integrator, bevorzugt des Typs "1/s". In einer Ausgestaltung folgt ein Quadrieren des Ausgangssignals "ed", was durch das Blockschaltsymbol "|u²|" in Figur 3 angezeigt wird. Das Diagramm III der Figur 3 zeigt das daraus resultierende Ausgangssignal.

In einer Ausgestaltung ist ein weiterer Signalverarbeitungsschritt bzw. ein weiteres Signalverarbeitungsmodul zwischen diesem resultierenden Ausgangssignal und dem Überwachungswert W vorgesehen, die wie nachfolgend beschrieben eingerichtet sind.

Es handelt sich dabei um ein Verzögerungsglied erster Ordnung, das typischerweise durch folgende Differenzialgleichung mit einer Zeitkonstante T, einem Faktor K, einem von der Zeit t abhängigen Eingangssignal v(t) und einem ebenfalls zeitabhängigen Ausgangssignal y(t) sowie dessen Ableitung ẏ(t) beschrieben werden kann:

$$T \cdot \dot{y}(t) + y(t) = K \cdot v(t)$$

Durch das Verzögerungsglied erster Ordnung kann das Rauschen geglättet werden. Dabei bezeichnet das dreieckige Blockschaltsymbol "-K-" einen Verstärkungsfaktor. Der Verstärkungsfaktor des Blockschaltsymbols "-K-" und der Faktor K der Differenzialgleichung können unterschiedliche Faktoren sein. Das Blockschaltsymbol "Int1" bezeichnet einen Integrator des in dem Blockschaltsymbol angegebenen Typs.

Allgemein kann ein Speisenzubereitungsgerät beispielsweise ein Ofen, ein Kochautomat, eine Küchenmaschine oder ein Schnellkochtopf sein. Im Betrieb werden eine Speise und/oder eine Zutat in das Speisenzubereitungsgefäß 2 gegeben und die Speise 4 in dem Speisenzubereitungsgefäß 2 zubereitet. Insbesondere sind das Werkzeug 5 und/oder das Heizelement 3 in der Nähe des Bodens des Speisenzubereitungsgefäßes 2 angeordnet.

**Patentansprüche**

1. Speisenzubereitungsgerät (1) mit einem Speisenzubereitungsgefäß (2), einem Heizelement (3) zum Erhitzen einer Speise (4) in dem Speisenzubereitungsgefäß (2), einem Werkzeug (5) zum Mischen und/oder Zerkleinern einer Speise (4) in dem Speisenzubereitungsgefäß (2), einem Deckel (6, 7) für das Speisenzubereitungsgefäß (2) und einem Elektromotor (8) zum Rotieren des Werkzeugs (5), einer Überwachungseinheit, die so eingerichtet ist, dass die Überwachungseinheit eine Leistungsaufnahme des Elektromotors (8) für ein Detektieren eines Überdrucks im Speisenzubereitungsgefäß (2) überwachen kann, **dadurch gekennzeichnet, dass** das Speisenzubereitungsgerät (1) so eingerichtet ist, dass während des Betriebs in Abhängigkeit von der Leistungsaufnahme des Elektromotors (8) die Heizleistung beeinflusst wird, insbesondere erhöht oder reduziert wird.

2. Speisenzubereitungsgerät (1) nach Anspruch 1, **dadurch gekennzeichnet, dass** die Überwachungseinheit so eingerichtet ist, dass anhand eines Ergebnisses der Detektion aus dem Überwachen der Leistungsaufnahme des Elektromotors (8) ein Speisenzubereitungsparameter und/oder ein Rezept für die Speise (4) angepasst werden.

3. Speisenzubereitungsgerät (1) nach einem der vorhergehenden Ansprüche, **dadurch gekennzeichnet, dass** das Speisenzubereitungsgerät (1) so eingerichtet ist, dass während des Betriebs in Abhängigkeit von der Leistungsaufnahme des Elektromotors (8) ein Hinweis für den Benutzer bereitgestellt wird.

4. Speisenzubereitungsgerät (1) nach einem der vorhergehenden Ansprüche, **dadurch gekennzeichnet, dass** das Speisenzubereitungsgerät (1) so eingerichtet ist, dass während des Betriebs in Abhängigkeit von der Leistungsaufnahme des Elektromotors (8) eine Verriegelungseinrichtung (9) für den Deckel (6, 7) gesteuert werden kann.

5. Speisenzubereitungsgerät (1) nach einem der vorhergehenden Ansprüche, **dadurch gekennzeichnet, dass** das Speisenzubereitungsgerät (1) so eingerichtet ist, dass während des Betriebs ein Überdruck durch Vergleich der erfassten Leistungsaufnahme des Elektromotors (8) zeitlich vor und nach einem Überschreiten eines Siedepunktes ($t_S$) einer Flüssigkeit oder einer ausgewählten Temperatur in dem Speisenzubereitungsgefäß (2) detektiert wird.

6. Speisenzubereitungsgerät (1) nach einem der vorhergehenden Ansprüche, **dadurch gekennzeichnet, dass** das Speisenzubereitungsgerät (1) so eingerichtet ist, dass während des Betriebs die Überwachungseinheit die Leistungsaufnahme des Elektromotors (8) für das Detektieren eines Überdrucks im Speisenzubereitungsgefäß (2) erst bei Erreichen einer Mindesttemperatur im Speisenzubereitungsgefäß (2) überwacht, vorzugsweise erst ab Erreichen von 50°C, 70°C, 90°C oder 100°C.

7. Speisenzubereitungsgerät (1) nach einem der vorhergehenden Ansprüche, **dadurch gekennzeichnet, dass** die Überwachungseinheit eine Detektionsschwelle (M) zur Detektion eines Überdrucks umfasst und so eingerichtet ist, dass ein Überwachungsereignis von der Überwachungseinheit ausgegeben wird, wenn ein Überwachungswert, der auf Basis der erfassten Leistungsaufnahme des Elektromotors (8) ermittelt wird, die Detektionsschwelle (M) erreicht.

**8.** Speisenzubereitungsgerät (1) nach dem vorhergehenden Anspruch, **dadurch gekennzeichnet, dass** der Überwachungswert einem gleitenden Mittelwert ($K_g$), einer Schwankungsamplitude ($K_A$) und/oder einer Grundfrequenz ($K_F$) der erfassten Leistungsaufnahme des Elektromotors (8) entspricht.

**9.** Speisenzubereitungsgerät (1) nach einem der zwei vorhergehenden Ansprüche, **dadurch gekennzeichnet, dass** die Detektionsschwelle (M) eine mitlaufende Schwelle oder eine absolute Schwelle ist.

**10.** Speisenzubereitungsgerät (1) nach einem der drei vorhergehenden Ansprüche, **dadurch gekennzeichnet, dass** das Speisenzubereitungsgerät (1) so eingerichtet ist, dass während des Betriebs die Detektionsschwelle (M) mit der erfassten Leistungsaufnahme des Elektromotors (8) nach einem Erreichen einer Mindesttemperatur und/oder vor einem Erreichen einer Höchsttemperatur oder eines Siedepunktes ($t_S$) ermittelt wird.

**11.** Speisenzubereitungsgerät (1) nach einem der vier vorhergehenden Ansprüche, **dadurch gekennzeichnet, dass** das Speisenzubereitungsgerät (1) so eingerichtet ist, dass während des Betriebs erst nach Erreichen einer ausgewählten Temperatur oder des Siedepunktes ($t_S$) zum Überwachen des Überwachungsereignisses ermittelt wird, ob der Überwachungswert die Detektionsschwelle (M) erreicht.

**12.** Speisenzubereitungsgerät (1) nach einem der vorhergehenden Ansprüche, **dadurch gekennzeichnet, dass** die Leistungsaufnahme über den Motorstrom (I) für den Elektromotor (8) ermittelt wird.

**13.** Verfahren für ein Detektieren eines Überdrucks in einem Speisenzubereitungsgefäß (2) eines Speisenzubereitungsgerätes (1) mit einem Heizelement (3) zum Erhitzen einer Speise (4) in dem Speisenzubereitungsgefäß (2), einem Werkzeug (5) zum Mischen und/oder Zerkleinern einer Speise (4) in dem Speisenzubereitungsgefäß (2), einem Deckel (6, 7) für das Speisenzubereitungsgefäß (2) und einem Elektromotor (8) zum Rotieren des Werkzeugs (5), wobei eine Überwachungseinheit eine Leistungsaufnahme des Elektromotors (8) zum Detektieren eines Überdrucks im Speisenzubereitungsgefäß (2) überwacht, **dadurch gekennzeichnet, dass** während des Betriebs in Abhängigkeit von der Leistungsaufnahme des Elektromotors (8) die Heizleistung beeinflusst wird, insbesondere erhöht oder reduziert wird.

**14.** Computerprogrammprodukt, umfassend Befehle, die bei der Ausführung des Programms durch eine Datenverarbeitungseinrichtung (10) diese veranlassen, die Schritte des Verfahrens nach dem vorhergehenden Anspruch auszuführen, wobei die Datenverarbeitungseinrichtung die Überwachungseinheit umfasst.

**Claims**

**1.** Food preparation apparatus (1) comprising a food preparation vessel (2), a heating element (3) for heating a food (4) in the food preparation vessel (2), a tool (5) for mixing and/or chopping a food (4) in the food preparation vessel (2), a lid (6, 7) for the food preparation vessel (2) and an electric motor (8) for rotating the tool (5), a monitoring unit configured such that the monitoring unit can monitor a power consumption of the electric motor (8) for detecting an overpressure in the food preparation vessel (2), **characterized in that** the food preparation apparatus (1) is configured such that during operation the heat output is influenced, in particular increased or reduced, depending on the power consumption of the electric motor (8).

**2.** Food preparation apparatus (1) according to claim 1, **characterized in that** the monitoring unit is configured such that a food preparation parameter and/or a recipe for the food (4) are adapted on the basis of a result of the detection of the monitoring of the power consumption of the electric motor (8).

**3.** Food preparation apparatus (1) according to one of the preceding claims, **characterized in that** the food preparation apparatus (1) is configured such that during operation, depending on the power consumption of the electric motor (8), an indication is provided to the user.

**4.** Food preparation apparatus (1) according to one of the preceding claims, **characterized in that** the food preparation apparatus (1) is configured such that during operation, depending on the power consumption of the electric motor (8), a locking device (9) for the lid (6, 7) can be controlled.

**5.** Food preparation apparatus (1) according to one of the preceding claims, **characterized in that** the food preparation apparatus (1) is configured such that during operation an overpressure is detected by comparison of the captured power consumption of the electric motor (8) temporally before and after exceeding a boiling point ($t_S$) of a liquid or a selected temperature in the food preparation vessel (2).

**6.** Food preparation apparatus (1) according to one of the preceding claims, **characterized in that** the food preparation apparatus (1) is configured such that during operation the monitoring unit monitors the power consumption of the electric motor (8) for detecting an overpressure in the food preparation vessel (2) only when a minimum temperature in the food preparation vessel (2) is reached, preferably only after reaching 50°C, 70°C, 90°C or 100°C.

7. Food preparation apparatus (1) according to one of the preceding claims, **characterized in that** the monitoring unit comprises a detection threshold (M) for detecting an overpressure and is configured such that a monitoring event is output by the monitoring unit when a monitoring value determined on the basis of the captured power consumption of the electric motor (8) reaches the detection threshold (M).

8. Food preparation apparatus (1) according to the preceding claim, **characterized in that** the monitoring value corresponds to a moving average value ($K_g$), a fluctuation amplitude ($K_A$) and/or a fundamental frequency ($K_F$) of the captured power consumption of the electric motor (8).

9. Food preparation apparatus (1) according to one of the two preceding claims, **characterized in that** the detection threshold (M) is a moving threshold or an absolute threshold.

10. Food preparation apparatus (1) according to one of the three preceding claims, **characterized in that** the food preparation apparatus (1) is configured such that during operation the detection threshold (M) is determined with the captured power consumption of the electric motor (8) after reaching a minimum temperature and/or before reaching a maximum temperature or a boiling point ($t_S$).

11. Food preparation apparatus (1) according to one of the four preceding claims, **characterized in that** the food preparation apparatus (1) is configured such that during operation, for monitoring the monitoring event, it is only determined whether the monitoring value reaches the detection threshold (M) after a selected temperature or the boiling point ($t_S$) has been reached.

12. Food preparation apparatus (1) according to one of the preceding claims, **characterized in that** the power consumption is determined via the motor current (I) for the electric motor (8).

13. Method for detecting an overpressure in a food preparation vessel (2) of a food preparation apparatus (1) comprising a heating element (3) for heating a food (4) in the food preparation vessel (2), a tool (5) for mixing and/or chopping a food (4) in the food preparation vessel (2), a lid (6, 7) for the food preparation vessel (2) and an electric motor (8) for rotating the tool (5), wherein a monitoring unit monitors a power consumption of the electric motor (8) for detecting an overpressure in the food preparation vessel (2), **characterised in that** during operation the heat output is influenced, in particular increased or reduced, depending on the power consumption of the electric motor (8).

14. Computer program product comprising instructions which, when the program is executed by a data processing device (10), cause it to carry out the steps of the method according to the preceding claim, wherein the data processing device comprises the monitoring unit.

**Revendications**

1. Appareil de préparation d'aliments (1) comprenant un récipient de préparation d'aliments (2), un élément de chauffage (3) pour chauffer un aliment (4) dans le récipient de préparation d'aliments (2), un outil (5) pour mélanger et/ou broyer un aliment (4) dans le récipient de préparation d'aliments (2), un couvercle (6, 7) pour le récipient de préparation d'aliments (2) et un moteur électrique (8) pour faire tourner l'outil (5), une unité de supervision, qui est configurée de sorte que l'unité de supervision peut superviser une consommation électrique du moteur électrique (8) pour détecter une surpression dans le récipient de préparation d'aliments (2), **caractérisé en ce que** l'appareil de préparation d'aliments (1) est adapté de sorte que pendant le fonctionnement la puissance de chauffage est influencée, notamment augmentée ou réduite en fonction de la consommation électrique du moteur électrique (8).

2. Appareil de préparation d'aliments (1) selon la revendication 1, **caractérisé en ce que** l'unité de supervision est configurée de sorte qu'un paramètre de préparation d'aliments et/ou une recette de l'aliment (4) sont adaptés sur la base d'un résultat de la détection à partir de la supervision de la consommation électrique du moteur électrique (8).

3. Appareil de préparation d'aliments (1) selon l'une des revendications précédentes, **caractérisé en ce que** l'appareil de préparation d'aliments (1) est configuré de sorte que pendant le fonctionnement une indication est fournie pour l'utilisateur en fonction de la consommation électrique du moteur électrique (8).

4. Appareil de préparation d'aliments (1) selon l'une des revendications précédentes, **caractérisé en ce que** l'appareil de préparation d'aliments (1) est configuré de sorte que pendant le fonctionnement un dispositif de verrouillage (9) du couvercle (6, 7) peut être commandé en fonction de la consommation électrique du moteur électrique (8).

**5.** Appareil de préparation d'aliments (1) selon l'une des revendications précédentes, **caractérisé en ce que** l'appareil de préparation d'aliments (1) est configuré de sorte que pendant le fonctionnement une surpression est détectée à l'aide d'une comparaison de la consommation électrique détectée du moteur électrique (8) temporellement avant et après le franchissement d'un point d'ébullition ($t_S$) d'un liquide ou d'une température sélectionnée dans le récipient de préparation d'aliments (2).

**6.** Appareil de préparation d'aliments (1) selon l'une des revendications précédentes, **caractérisé en ce que** l'appareil de préparation d'aliments (1) est configuré de sorte que pendant le fonctionnement l'unité de supervision ne supervise la consommation électrique du moteur électrique (8) pour détecter une surpression dans le récipient de préparation d'aliments (2) qu'à partir du moment où une température minimale est atteinte dans l'appareil de préparation d'aliments (1), de préférence qu'à partir du moment où une température de 50°C, de 70°C, de 90°C ou de 100°C est atteinte.

**7.** Appareil de préparation d'aliments (1) selon l'une des revendications précédentes, **caractérisé en ce que** l'unité de supervision comprend un seuil de détection (M) pour détecter une surpression et elle est configurée de sorte qu'un résultat de supervision est sorti de l'unité de supervision, si une valeur de supervision, qui est déterminée sur la base de la consommation électrique détectée du moteur électrique (8), atteint le seuil de détection (M).

**8.** Appareil de préparation d'aliments (1) selon l'une des revendications précédentes, **caractérisé en ce que** la valeur de supervision correspond à une moyenne mobile ($K_g$) d'une amplitude de variation ($K_A$) et/ou à une fréquence de base ($K_F$) de la consommation électrique détectée du moteur électrique (8).

**9.** Appareil de préparation d'aliments (1) selon l'une des deux revendications précédentes, **caractérisé en ce que** le seuil de détection (M) est un seuil relatif ou un seuil absolu.

**10.** Appareil de préparation d'aliments (1) selon l'une des trois revendications précédentes, **caractérisé en ce que** l'appareil de préparation d'aliments (1) est configuré de sorte que pendant le fonctionnement le seuil de détection (M) est déterminé avec la consommation électrique du moteur électrique (8) après qu'une température minimale soit atteinte ou avant qu'une température maximale ou un point d'ébullition ($t_S$) soit atteint(e).

**11.** Appareil de préparation d'aliments (1) selon l'une des quatre revendications précédentes, **caractérisé en ce que** l'appareil de préparation d'aliments (1) est configuré de sorte que pendant le fonctionnement seulement après qu'une température sélectionnée ou le point d'ébullition ($t_S$) soit atteint(e) il est déterminé pour superviser le résultat de supervision, si la valeur de supervision atteint le seuil de détection (M).

**12.** Appareil de préparation d'aliments (1) selon l'une des revendications précédentes, **caractérisé en ce que** la consommation électrique est déterminée via le courant de moteur (I) du moteur électrique (8).

**13.** Procédé de détection d'une surpression dans un récipient de préparation d'aliments (2) d'un appareil de préparation d'aliments (1) comprenant un élément de chauffage (3) pour chauffer un aliment (4) dans le récipient de préparation d'aliments (2), un outil (5) pour mélanger et/ou broyer un aliment (4) dans le récipient de préparation d'aliments (2), un couvercle (6, 7) pour le récipient de préparation d'aliments (2) et un moteur électrique (8) pour faire tourner l'outil (5), une unité de supervision supervisant une consommation électrique du moteur électrique (8) pour détecter une surpression dans le récipient de préparation d'aliments (2), **caractérisé en ce que** pendant le fonctionnement la puissance de chauffage est influencée, notamment augmentée ou réduite en fonction de la consommation électrique du moteur électrique (8).

**14.** Produit de programme d'ordinateur comprenant des commandes, qui incitent un dispositif de traitement de données (10) pendant l'exécution du programme par celui-ci à exécuter les étapes du procédé selon la revendication précédente, le dispositif de traitement de données comprenant l'unité de supervision.

FIG.1

FIG.2

FIG.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2529650 A1
- US 2011154995 A1
- WO 2012042981 A1
- WO H11225891 A
- JP 2014073290 A